# EUROPÄISCHE PATENTSCHRIFT

(11) **EP 3 603 466 B1**
(45) Veröffentlichungstag und Bekanntmachung des Hinweises auf die Patenterteilung: **09.03.2022**
(21) Anmeldenummer: 19189338.7
(22) Anmeldetag: 31.07.2019
(51) Int. Cl.: A47J 37/07, A47J 37/06, F24C 3/12

(54) **VORRICHTUNG ZUM REGELN DER TEMPERATUR EINES GRILLS, INSBESONDERE EINES GASGRILLS**
DEVICE FOR REGULATING THE TEMPERATURE OF A GRILL, ESPECIALLY A GAS GRILL
DISPOSITIF DE RÉGULATION DE LA TEMPÉRATURE D'UN GRIL, EN PARTICULIER D'UN GRIL À GAZ

(30) Priorität: 02.08.2018 DE 102018118850
(43) Veröffentlichungstag der Anmeldung: 05.02.2020
(73) Patentinhaber: examedia GmbH, 50935 Köln Nordrhein Westfalen (DE)
(72) Erfinder: Asshauer, Klaus, 78315 Radolfzell (DE); Hilzinger, Rolf, 8200 Schaffhausen (CH)
(74) Vertreter: Heisel, Wolfgang

(56) Entgegenhaltungen:
- US-A1- 2014 261 006
- US-A1- 2018 008 095
- Anonymous: "Anleitung Tripod - Stand", grillsportverein, 26. November 2017 (2017-11-26), XP055617630, Gefunden im Internet: URL:https://www.grillsportverein.de/forum/ attachments/anleitung-tripod-stand-26-11-2 017-pdf.1618971 [gefunden am 2019-09-03]

## Beschreibung

### Technisches Gebiet

Die Erfindung bezieht sich auf die Vorrichtung zum Regeln der Temperatur eines Grills, die zwischen einer Wärmeversorgungseinheit und einer Einheit für Wärmeabgabe, die Teil des Grills ist und zum Grillieren des Gutes verwendet wird, angeordnet ist, wobei die Vorrichtung ein Steuerelement zur Regelung der Wärmemenge, das in der Regel von Hand bedienbar ist, umfasst.

### Definitionen

Unter dem Begriff "Steuern" wird mit Hilfe einer Stellgröße eine Vorrichtung oder Anlage beeinflusst. Regeln ist ein Vorgang, bei dem der IST-Wert einer Grösse gemessen und durch Nachstellen mit einer definierten Steuergrösse dem SOLLWert angeglichen wird.

Beim Grillen wird das Gargut im Wesentlichen durch Wärmestrahlung gegart und an der Oberfläche geröstet. Dazu wird es entweder mithilfe eines Spiesses oder auf einem Grillrost über, neben oder unter einer strahlenden Wärmequelle gehalten. Als Hitzequelle dienen Holzfeuer oder Holzglut, Gas, durch Gas erhitzte Steine oder elektrische Heizschleifen. Um hier den Grillvorgang zu bewirken, gibt die Hitzequelle eine Leistung ab. Diese Leistung ist durch mechanische Steuerelemente, die von Hand bedienbar sind, steuerbar. Dabei wird bei einem Gasgrill die Gasmenge, bei einem mit Strom betriebenen Grill die Menge des Stroms gesteuert. Die Steuerelemente sind Dreh- oder Schiebeknöpfe.

### Stand der Technik

Geräte zum Einsatz im Freien werden seit Langem dazu verwendet, Lebensmittel zuzubereiten und andere Aufgaben auszuführen. Zum Beispiel werden Geräte zum Einsatz im Freien wie etwa Grills und Räuchergrills (Barbecue-Smoker) oft zum Zubereiten von Fleisch, Gemüse, Obst und anderen Arten von Lebensmitteln verwendet. Diese Grills und Räuchergrills werden typischerweise unter Verwendung von manuellen, in den Rahmen des Grills oder Räuchergrills integrierten mechanisch (mit der Hand) bedienbaren Steuerelementen betrieben. So weisen zum Beispiel viele solcher Geräte zum Einsatz im Freien einen Zündknopf, welcher beim Drücken einen Funken in der Nähe eines Gasauslasses an einem Brenner (Einheit für Wärmeabgabe) erzeugt, auf. Dabei wird als Wärmeversorgungseinheit eine Gasflasche verwendet, dessen Gas über das Steuerelement zur Einheit für Wärmeabgabe strömt. Der Funke entzündet das Gas und der Brenner beginnt, Wärme zu erzeugen. Die Wärmemenge wird im Allgemeinen mittels einer Drehscheibe oder eines Drehknopfes gesteuert, der mehr oder weniger Gas in den Brenner einströmen lässt.

In einigen Fällen können solche Grillvorrichtungen auch elektronische Steuerelemente aufweisen. Anstatt dass diese eine manuelle Drehscheibe oder einen Drehknopf zum Justieren der an dem Brenner eingeführten Gasmenge aufzuweisen, wird eine elektronische Steuerung durch den Nutzer eingestellt oder justiert. Die elektronische Steuerung interagiert dann mit einer Magnetspule oder einer anderen elektromechanischen Komponente, um den Gasfluss zum Brenner zu regulieren. Der Nutzer muss sich dennoch, wie dies bei manuellen Drehscheiben und Drehknöpfen der Fall ist, immer noch an dem Grill befinden, um Einstellungen des Grills zu ändern. Um dieses Problem zu lösen, wurden einige vor Kurzem hergestellte Geräte zum Einsatz im Freien mit Bluetooth-Funkeinrichtungen ausgerüstet. Diese Bluetooth-Funkeinrichtungen ermöglichen eine Kommunikation mit räumlich nahen elektronischen Einrichtungen einschliesslich Mobilfunktelefonen oder Tablet-PCs des Gerätebesitzers. Ausserdem hat das Gerät, selbst wenn es mit einer mobilen Einrichtung verbunden ist, sehr beschränkte Optionen. Tatsächlich hat das Gerät über die mobile Einrichtung des Nutzers hinaus keinen Zugriff auf Informationen oder Steuersignale. Zudem kann in der Regel nur ein Gerät mit jeweils einem Bluetooth-betriebenen Gerät gekoppelt werden.

Unter https://www.grillsportverein.de/forum/attachments/anleitung-tripod-stand-26-11-2017-pdf. 1618971 / (Stand 26.11.2017) ist eine Vorrichtung zum Verstellen eines Steuerelements eines Gasgrills bekannt. Hierzu ist das Steuerelement zu entfernen und die Vorrichtung anzubringen. Ein integrierter Stellmotor kann über eine Steuereinheit die Steuerung übernehmen.

Die Vorrichtung, die in der DE 10 2011 002 853 A1 geht von einer Gargerätvorrichtung mit wenigstens einer Steuer- und/oder Regeleinheit und zumindest einer Gareinheit aus, welche wenigstens eine Direktauflagefläche zu einem Auflegen von Gargut aufweist und welche zu einem offenen Garen von Gargut vorgesehen ist. Um einen geringen Energieverbrauch zu erreichen, wird vorgeschlagen, dass die Steuer- und/oder Regeleinheit dazu vorgesehen ist, nach einer Leerbetriebs-Heizphase selbsttätig wenigstens einen leistungsreduzierten Heizmodus zu aktivieren.

In der US 2014/0261006 A1 ist ein Gasgrill beschrieben. Dieser temperatursteuerbarer Gasgrill umfasst einen Hauptkörper mit einer Grillkammer, mehrere Brenner im Hauptkörper zum Verbrennen von Gas, einen Temperatursensor zum Erfassen einer aktuellen Temperatur in der Grillkammer, ein Gasventil und eine Steuerung. Das Gasventil hat einen Schieber und einen Schrittmotor, und der Schrittmotor bewegt den Schieber, um einen den Brennern zugeführten Gasstrom zu ändern. Die Steuerung verfügt über eine Benutzeroberfläche und eine Verarbeitungseinheit. Ein Benutzer gibt eine Einstelltemperatur über die Benutzerschnittstelle ein, und die Verarbeitungseinheit steuert den Schrittmotor gemäß der aktuellen Temperatur und der Einstelltemperatur, um die aktuelle Temperatur in der Grillkammer in einem begrenzten Bereich zu halten.

Aus der US 2018/008095 A1 ist ein Gaskochsystem für den Aussenbereich mit mehreren Brennern bekannt. Bei diesem System weisen die einzelnen manuellen Steuerventile für alle Brenner beispielsweise eine erste Einstellung und eine weitere Einstellung auf, wobei letztere eine spezifizierte Aktivierungsposition darstellt. Zudem ist ein einzelnes elektronisches Hauptsteuerventil vorgesehen, das aktiviert werden kann. Die Gesamtgasbrennstoffmenge für alle Brenner im Gaskochsystem basiert beispielsweise auf einem Betriebssteuerungssollwert oder auf einer Zieldurchflussrate für alle Steuerventile. Die Gesamtbrennstoffmenge kann gesteuert werden, bei über Sensoren an den jeweiligen Brennern auf die einzelnen Steuerventile geregelt werden können. Die Steuerung ist ein integrativer Bestandteil des Gaskochsystems.

### Nachteile des Standes der Technik

Grillvorrichtungen mit einer Haube weisen zusätzlich ein Temperarturmessgerät auf. Dieses ist ein Thermometer, dessen Messfühler im Innenraum der Haube die tatsächliche Temperatur feststellen. Durch dieses Temperaturmessgerät wird die Temperatur des Innenraums des Grills visuell angezeigt.

Diese Temperatur ist von dem Anwender zu analysieren. Ist diese zu hoch, so ist über Steuerelemente die Wärmemenge einzustellen, damit diese Temperatur entsprechend geändert werden kann.

Ist der Anwender etwas von dem Grill räumlich entfernt, so kann er nicht mehr die Temperatur kontrollieren und hat dann keine Möglichkeit, einzugreifen, falls sich die Temperatur ungewollt verändert. Insbesondere in der Startphase ist ein genaues Beobachten und dann auch ein entsprechendes Nachregulieren notwendig.

Darin besteht die Gefahr, dass das zu grillierende Gut überhitzt, verbrennt oder sonstigen Schaden nimmt, so dass dieses ungeniessbar wird.

Bisherige elektrisch bedienbare Steuerelemente müssen bauseits vom Hersteller verbaut werden, da diese unmittelbar in den Gaskreislauf eingreifen. Dem Anwender ist es aus sicherheitstechnischen Gründen nicht erlaubt, hier entsprechend tätig zu werden. Sofern der Anwender Drehknopf oder Gaszufuhr verändert, erlöschen die Betriebserlaubnis und die Garantie des Grills.

### Aufgabe der Erfindung

Aufgabe der Erfindung ist es, eine Vorrichtung bereitzustellen, mit der auf einfache Art und Weise eine Regelung der Wärmemenge innerhalb eines Grills, der insbesondere mit Gas betrieben wird, zu schaffen.

### Lösung der Aufgabe

Die Lösung der Aufgabe wird durch die Merkmale von Anspruch 1 gekennzeichnet.

### Vorteile der Erfindung

Der Grundgedanke der Erfindung ist es, einen bestehenden Grill, der vorzugsweise mit Gas betrieben ist und eine Haube aufweist, mit einer Vorrichtung mindestens zur Steuerung der Zufuhr der Wärmemenge auszubilden. Zudem ist vorgesehen, dass eine Regelung in Abhängigkeit der eingestellten gewollten Temperatur und der tatsächlichen Temperatur unter der Haube selbsttätig erfolgt.

Daher ist erfindungsgemäss mindestens ein Regelelement vorgesehen, das auf den Drehknopf zur Steuerung der Wärmemenge bzw. Leistung an dem Grill aufsetzbar ist, wobei das Regelelement einen Stellmotor aufweist, der über eine Regeleinheit gekoppelt ist. Mit der Regeleinheit oder dem Regelelement ist ebenfalls mindestens ein Sensor gekoppelt, der die tatsächliche Temperatur innerhalb der Haube misst und mit einem voreingestellten Temperatur-Wert vergleicht.

Erfindungsgemäß ist vorgesehen dass in der Regeleinheit unterschiedliche Temperatur-Zeit-Verläufe hinterlegt sind. Diese dienen dazu, es für den Anwender einfach zu gestalten, das zu grillende Gut zu garen bzw. zu grillen. Dadurch sind auch sogenannte "Smoke" Prozesse möglich, ohne dass es ein ständiges Beobachten und Messen bedarf. Die Regeleinheit umfasst eine externe Prozesseinheit, durch die unterschiedliche Temperatur-Zeit-Verläufe wählbar sind.

Eine Weiterbildung sieht vor, dass jeweils ein Regelelement auf den Drehknopf gesteckt wird, das dann über die Regeleinheit entsprechend angesteuert wird.

Um eine einfache Montage zu gewährleisten, wird eine eben ausgestaltete Blende über die mechanischen Steuerelemente geführt und vorzugweise an dem Grill - über Magnete oder ähnlich wirkende Mittel - befestigt. Diese Blende umfasst die Kennzeichnung für die Steuerelemente sowie die die elektronische Regeleinheit und ein Display. Zudem sind Steckkontakte für Sensoren und die elektronischen Steuerelemente vorhanden.

Die Regeleinheit und auch die das jeweilige Regelelement hat den Vorteil, dass diese die Eigenschaft aufweist, weitere Sensoren aufzunehmen. So kann beispielsweise ein Sensor zur Feststellung des Garpunkts eines zu grillierenden Fleischstücks angewendet werden.

Weiterbildungen sehen auch die Verwendung einer Zeitschaltuhr vor, die nach einer definierten Zeit die Temperatur entsprechend regelt oder die Wärmezufuhr abschaltet. Auch diese kann Bestandteil der Blende sein.

Durch die Blende kann ein einziges Bauteil an dem Grill angebracht werden, so dass eine einfache und sichere Handhabung gewährleistet ist.

Der wesentliche Vorteil der erfindungsgemässen Vorrichtung besteht darin, dass eine selbsttätige Regelung der Wärmezufuhr erfolgen kann, ohne in die mechanischen oder elektronischen Elemente eines Grills einzugreifen. Durch das einfache Aufsetzen der elektronischen Regelelemente auf die Drehknöpfe muss das bestehende System des Grills nicht verändert werden. Dies bedeutet auch, dass eventuelle Sicherheitsbestimmungen, Zweckbestimmungen oder auch rechtliche Vorschriften der im Handel erhältlichen Grillvorrichtungen nicht verändert werden. Beispielsweise bei Grillvorrichtungen, die mit Gas betrieben werden, greift die erfinderische Vorrichtung nicht in die Gaszuführung ein. Es ist nicht notwendig, die Gaszuführung zu ändern, andere Anschlüsse anzubringen oder selbst in den Gasstrom einzugreifen. Die Betriebszulassung der Vorrichtung bleibt unverändert erhalten.

Die erfindungsgemässe Vorrichtung ist für alle Arten von Grillvorrichtungen geeignet, die mechanische Drehknöpfe zur Steuerung der Wärmemenge bzw. Leistung auf dem Grill aufweisen, unabhängig davon, mit welcher Energie (Gas, Strom) die Grillvorrichtung betrieben wird.

Die einzelnen elektrischen Regelelemente können entweder mit einer Batterie betrieben werden, oder diese sind über die Regeleinheit mit Strom versorgt. Dies gilt auch für die Regeleinheit und das Display.

Die Regeleinheit bietet weiter die Möglichkeit, dass über übliche Datenübertragungstechniken Information auf ein Mobilfunkgerät oder Tablett übertragen werden. So kann der Anwender ständig, unabhängig wo er sich befindet, den Zustand seiner Grillvorrichtung erfahren. Zudem besteht die Möglichkeit, auch Regelungen über Mobilfunkgerät oder Tablett vorzunehmen.

Erfindungsgemäß ist vorgesehen, dass die Prozesseinheit Teil des Tablett-PC oder des Smartphones ist und dieser Prozess im Rahmen einer Applikation läuft. Dadurch können die hinterlegten Temperatur-Zeitkurven, mit denen die jeweiligen Regeelemente angesteuert werden, ausgewählt bzw. hinterlegt werden. In einer

Community können dadurch auch die selbst erstellten Temperatur-Zeit-Kurven ausgetauscht werden, so dass auf diese Weise Erfahrungen hinsichtlich des Grillens des zu grillenden Guts geteilt werden können.

Weitere vorteilhafte Ausgestaltungen gehen aus der nachfolgenden Beschreibung, den Ansprüchen sowie den Zeichnungen hervor.

### Zeichnungen

Es zeigen:
- Fig. 1: eine Ansicht auf einen handelsüblichen Grill mit mechanischen Steuerelementen und der erfindungsgemässen Vorrichtung;
- Fig. 2: eine weitere Ansicht auf den Grill gemäss Fig 1;
- Fig. 3: eine schematische Ansicht auf ein elektronisches Regelelement der erfindungsgemässen Erfindung;
- Fig. 4: eine Ansicht auf eine schematische Darstellung der Blende mit den Regelelementen und der Regeleinheit sowie einem Display.

### Beschreibung eines Ausführungsbeispiels

Die Vorrichtung 10 ist für einen Grill 1, der in der Regel im Freien genutzt werden kann, anwendbar.

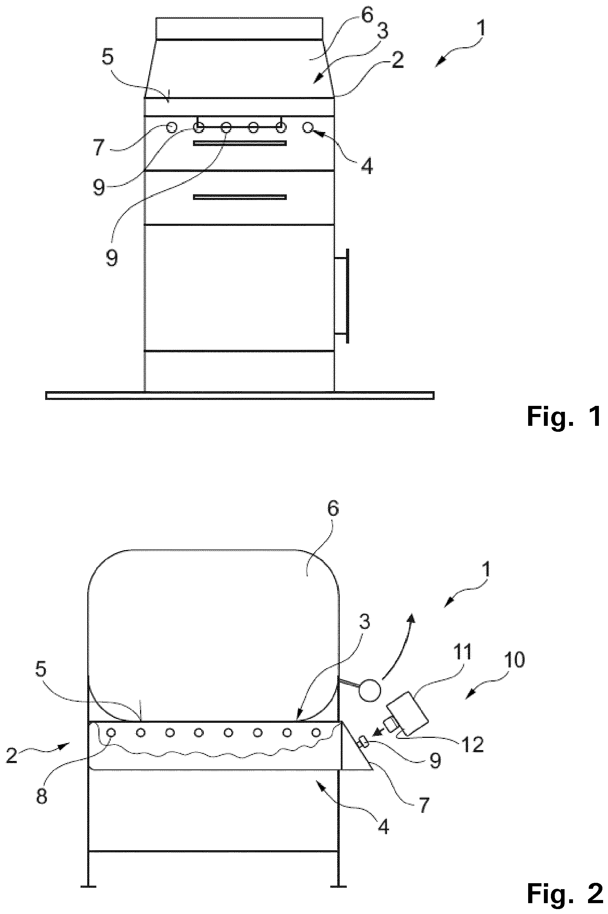

Ein solcher Grill 1 ist in Fig. 1 und 2 dargestellt. Er besteht aus einem Gehäuse 2 mit einer Oberseite 3 und einer Unterseite 4. Auf der Oberseite 3 ist eine Grillfläche 5 vorhanden, auf der das zu grillende Gut aufgelegt wird. Der Oberseite 3 zugewandt und an dieser einen Seite der Oberseite 3 angelenkt, ist eine Haube 6 vorgesehen, die der Oberseite zugewandt im geschlossenen Zustand einen Hohlraum bildet. Diese Haube 6 schliesst mit der Oberseite 3 ab.

Durch Drücken eines Zündknopf 7 wird beim Drücken ein Funken in der Nähe eines Gasauslasses an einem Brenner 8 erzeugt, auf. Der Funke entzündet das Gas und der Brenner 8 beginnt, Wärme zu erzeugen. Mit dieser Wärme wird das zu grillende Gut beheizt. Die Wärmemenge wird im Allgemeinen mittels einer Drehscheibe oder eines Drehknopfes in der Ausbildung eines mechanischen Steuerelements 9 gesteuert, der mehr oder weniger Gas in den Brenner einströmen lässt.

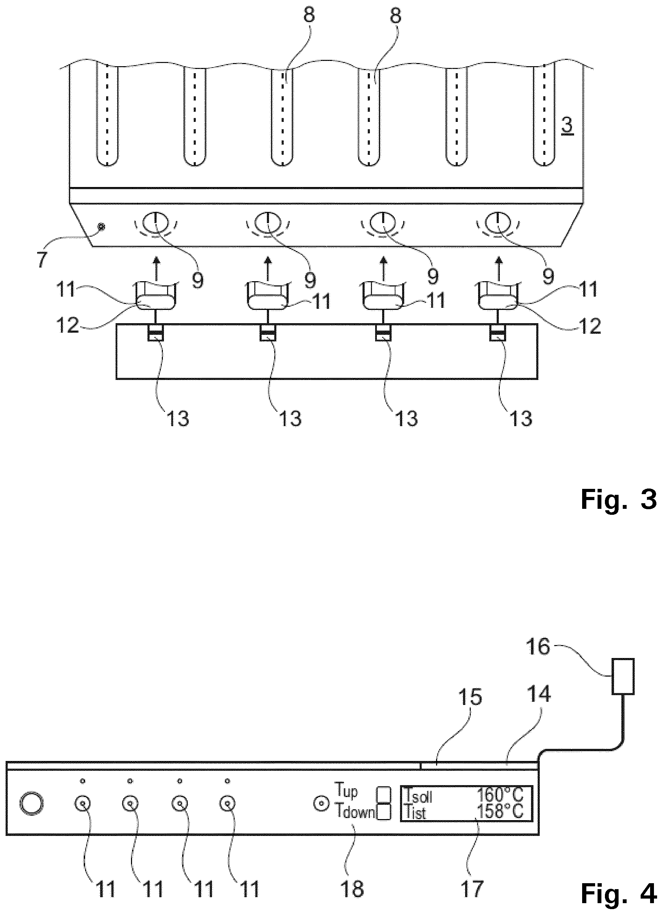

Die erfindungsgemässe Vorrichtung 10 umfasst nun bei dem hier dargestellten Ausführungsbeispiel und wie es in den Fig. 2 und 3 gezeigt wird, insgesamt vier Regelelemente 11. Diese Regelelemente 11 werden auf den jeweiligen Drehknopf (mechanisches Steuerelement 9) aufgesetzt.

Ein solches Regelelement 11 besteht aus einem Aufnahmeelement 12 und einem Geberelement 13. Das Aufnahmeelement 12 hat vorzugsweise eine zylinderförmige Ausbildung und kann derart ausgestaltet sein, dass die zylinderförmige Ausbildung auf den Drehknopf (mechanisches Steuerelement 9) des Grills drehfest aufgesetzt wird. Durch die entsprechende Ausgestaltung im Inneren des Aufnahmeelements ist vorzugsweise eine drehfeste Koppelung nur durch Aufstecken möglich. Hierfür umgreifen Stege im Inneren des Aufnahmeelements (12) das Griffelement des Drehknopfs (mechanisches Steuerelement 9).

Das Aufnahmeelement 12 ist mit dem Geberelement 13 gekoppelt. Dieses Geberelement 13 ist ein Servomotor oder Stellmotor, der von einer Regeleinheit 14 angesteuert wird.

Die Regeleinheit 14 ist eine elektronische Schaltung 15, die die Eigenschaft aufweist, dass hier zum einen das Geberelement 13 gesteuert wird, zum anderen Sensoren 16, die mit dem Regelelement 11 gekoppelt sind, deren bereitgestellte Werte dort auch entsprechend verarbeitet werden. So kann über ein Eingabefeld die gewünschte Temperatur vorgegeben werden. Diese wird auf einem Display 17 angezeigt. Die Regeleinheit 14 prüft ständig, ob die gewünschte Temperatur erreicht ist, in dem diese die Daten des Sensors ausliest. Ist diese nicht erreicht, wird wahlweise die Wärmemenge beibehalten oder erhöht, bis die gewünschte Temperatur erreicht wird. Dies geschieht, in dem die Regeleinheit vorgibt, um wieviele Winkelgrade sich das Geberelement in oder gegen den Uhrzeiger verstellen soll. Durch die Kopplung mit dem Aufnahmeelement 12 wird dann der Drehknopf des Grills entsprechend gleichwertig verstellt.

Die Geberelemente 13 können Servomotoren oder Schrittmotoren 13 oder gleichwirkende Mittel sein. Mit diesen können einfach auf kleine Umdrehungen entsprechend umgesetzt werden.

Um eine einfache Montage zu ermöglichen, ist die Blende 18 vorgesehen, dass an dem Grill angebracht wird, in dem dieses über die bestehenden Drehknöpfe (mechanische Steuerelemente 9) gestülpt wird. Mittels Magneten oder gleichwirkenden Mitteln wird diese Blende 18 befestigt. Sofern Teile des Grills nicht magnetisch sind, können auch Befestigungsmittel, wie beispielsweise Spannelemente, Spanngurte, Klebebänder oder gleichwirkende Mittel vorgesehen sein.

An der Blende 18 sind bereits die elektronischen Regelelemente 11 vorgesehen. Diese gehen dann eine Verbindung mit den Drehknöpfen ein, in dem das jeweilige Aufnahmeelement 12 den bestehenden Drehknopf überstülpt und mit diesem eine drehfeste Verbindung eingeht, wobei gleichzeitig die Blende 18 eine vorzugsweise lösbare Verbindung mit dem Grill 1 eingeht. Aufgrund der Gestaltung zu einer Einheit ist eine sehr einfache Montage möglich.

### BEZUGSZEICHENLISTE

**Vorrichtung zum Regeln der Temperatur eines Grills, insbesondere eines Gasgrills**
- 1: Grill
- 2: Gehäuse
- 3: Oberseite
- 4: Unterseite
- 5: Grillfläche
- 6: Haube
- 7: Zündknopf
- 8: Brenner
- 9: Steuerelement
- 10: Vorrichtung
- 11: Regelelement
- 12: Aufnahmeelement
- 13: Geberelement
- 14: Regeleinheit
- 15: elektrische Schaltung
- 16: Sensoren
- 17: Blende
- 18: Display

## Patentansprüche

1. Vorrichtung geeignet zum aktiven Verstellen eines oder mehrerer bei Grills zur Regelung der abgebenden Leistung vorgesehenen Drehknöpfe, wobei die Vorrichtung ein Regelelement umfasst, das aus einem Aufnahmeelement und einem Geberelement besteht, **wobei**
a. Eine mit dem Regelelement (11) gekoppelte Regeleinheit (14) vorgesehen ist, wobei die Regeleinheit (14) oder das Regelelement (11) mindestens einen mit diesem gekoppelten Sensor (16) umfasst, der die Temperatur misst und dessen bereitgestellten Werte dort auch entsprechend verarbeitet werden, und wobei die Regeleinheit (14) eine elektronische Schaltung ist,
b. die Regeleinheit (14) eine externe Prozesseinheit umfasst, durch die unterschiedliche Temperatur-Zeit-Verläufe wählbar sind, wobei die externe Prozesseinheit eine Applikation lauffähig auf einem Tablet-PC oder Smartphone ist,
c. das Aufnahmeelement (1 2) drehfest auf 13 den Drehknopf (9) des Grills aufsetzbar ist, und das Aufnahmeelement (12) eine zylindrische Ausbildung aufweist, die auf den Drehknopf (9) aufsetzbar ist.

2. Vorrichtung nach Anspruch 1, **dadurch gekennzeichnet, dass** ein Regelelement (11) Mittel für eine Masterfunktion aufweist, wobei ein oder mehrere weitere Regelelemente (11) Mittel für eine von der Masterfunktion abhängige Slavefunktion aufweisen.

3. Vorrichtung nach Anspruch 1, **dadurch gekennzeichnet, dass** der Sensor (16) drahtgebunden mit dem Regelelement (11) verbunden ist.

4. Vorrichtung nach Anspruch 1, **dadurch gekennzeichnet, dass** der Sensor (16) ein Platin-Messwiderstand ist.

5. Vorrichtung nach einem der vorhergehenden Ansprüche, **dadurch gekennzeichnet, dass** ein oder mehrere Regelelemente (11) auf einer Blende (17) angeordnet ist, die wiederum Mittel zur Befestigung an dem Grill aufweist.

6. Vorrichtung nach Anspruch 5, **dadurch gekennzeichnet, dass** die Blende (17) ein Display (18) aufweist.

7. Vorrichtung nach Anspruch 1, **dadurch gekennzeichnet, dass** das Geberelement (13) ein Servomotor oder Stellmotor ist.

## Claims

1. Apparatus suitable for actively adjusting one or more knobs provided on grills for the closed-loop control of the power being output, wherein the apparatus comprises a closed-loop control element comprising a receiving element and an encoder element, **wherein**
a. a closed-loop control unit (14) coupled to the closed-loop control element (11) is provided, wherein the closed-loop control unit (14) or the closed-loop control element (11) comprises at least one sensor (16) which is coupled thereto and measures the temperature and the provided values of which are also accordingly processed there, and wherein the closed-loop control unit (14) is an electronic circuit,
b. the closed-loop control unit (14) comprises an external process unit which can be used to select different temperature/time profiles, wherein the external process unit is an application executable on a tablet PC or a smartphone,
c. the receiving element (12) can be placed onto the knob (9) of the grill in a rotationally fixed manner, and the receiving element (12) has a cylindrical design which can be placed onto the knob (9).

2. Apparatus according to Claim 1, **characterized in that** a closed-loop control element (11) has means for a master function, wherein one or more further closed-loop control elements (11) have means for a slave function dependent on the master function.

3. Apparatus according to Claim 1, **characterized in that** the sensor (16) is connected to the closed-loop control element (11) in a wired manner.

4. Apparatus according to Claim 1, **characterized in that** the sensor (16) is a platinum measuring resistor.

5. Apparatus according to one of the preceding claims, **characterized in that** one or more closed-loop control elements (11) are arranged on a panel (17) which in turn has means for fastening to the grill.

6. Apparatus according to Claim 5, **characterized in that** the panel (17) has a display (18).

7. Apparatus according to Claim 1, **characterized in that** the encoder element (13) is a servomotor.

## Revendications

1. Dispositif apte au réglage actif d'un ou de plusieurs boutons rotatifs prévus sur des grils pour la régulation de la puissance utile, le dispositif comprenant un élément de régulation qui est composé d'un élément récepteur et d'un élément donneur, **dans lequel**
a. une unité de régulation (14) couplée avec l'élément de régulation (11) est prévue, l'unité de régulation (14) ou l'élément de régulation (11) comprenant au moins un capteur (16) couplé avec celle-ci ou celui-ci, qui mesure la température et dont les valeurs fournies y sont aussi traitées de façon adéquate, et l'unité de régulation (14) étant un circuit électronique,
b. l'unité de régulation (14) comprend une unité de processus externe qui permet de sélectionner les différentes courbes température/temps, l'unité de processus externe étant une application pouvant être exécutée sur une tablette PC ou un smartphone,
c. l'élément récepteur (12) peut être placé de manière verrouillée en rotation sur le bouton rotatif (9) du gril, et l'élément récepteur (12) présente une configuration cylindrique qui peut être placée sur le bouton rotatif (9).

2. Dispositif selon la revendication 1, **caractérisé en ce qu'**un élément de régulation (11) présente des moyens destinés à une fonction maître, un ou plusieurs éléments de régulation supplémentaires (11) présentant des moyens destinés à une fonction esclave dépendant de la fonction maître.

3. Dispositif selon la revendication 1, **caractérisé en ce que** le capteur (16) est relié par câble à l'élément de régulation (11).

4. Dispositif selon la revendication 1, **caractérisé en ce que** le capteur (16) est une résistance de mesure de platine.

5. Dispositif selon l'une quelconque des revendications précédentes, **caractérisé en ce qu'**un ou plusieurs éléments de régulation (11) sont disposés sur un panneau (17) qui présente à son tour des moyens de fixation au gril.

6. Dispositif selon la revendication 5, **caractérisé en ce que** le panneau (17) présente un affichage (18).

7. Dispositif selon la revendication 1, **caractérisé en ce que** l'élément donneur (13) est un servomoteur ou un moteur de commande.
